# FASCICULE DE BREVET EUROPEEN

(11) **EP 1 404 978 B1**
(45) Date de publication et mention de la délivrance du brevet: **05.09.2007**
(21) Numéro de dépôt: 02760374.5
(22) Date de dépôt: 02.07.2002
(51) Int. Cl.: F15B 20/00

(54) **CIRCUIT HYDRAULIQUE POUR UN SYSTEME DE FREINAGE D'AERONEF**
HYDRAULIKKREIS FÜR EIN FLUGZEUGBREMSSYSTEM
HYDRAULIC CIRCUIT FOR AN AIRCRAFT BRAKE SYSTEM

(30) Priorité: 12.07.2001 FR 0109274
(43) Date de publication de la demande: 07.04.2004
(73) Titulaire: MESSIER-BUGATTI, 78140 Velizy Villacoublay (FR)
(72) Inventeur: HAMZEH, Walid, F-31530 Levignac (FR); LIBOUREL, Jérôme, F-92370 Chaville (FR)
(74) Mandataire: Jaunez, Xavier
(86) Numéro de dépôt international: PCT/FR2002/002297
(87) Numéro de publication internationale: WO 2003/008811

(56) Documents cités:
- EP-A- 0 328 175
- EP-A- 0 477 079
- DE-A- 19 654 781
- FR-A- 2 224 657
- FR-A- 2 815 089
- US-A- 5 397 173

## Description

L'invention concerne un circuit hydraulique tel que ceux installés dans un aéronef pour alimenter les actionneurs de freinage de l'aéronef.

Certaines des fonctions assurées par ces actionneurs sont critiques, c'est-à-dire que leur perte serait catastrophique pour les passagers, sans parler des possibles dégâts sur l'aéronef lui-même.

Par ailleurs, l'exigence de sécurité conduit à orienter la conception des systèmes de l'aéronef pour faire en sorte qu'une panne simple d'un système (par exemple la panne du circuit hydraulique principal) ne puisse conduire à une catastrophe.

Aussi équipe-t-on généralement les aéronefs d'un circuit hydraulique de secours, dont le fluide hydraulique est acheminé vers les actionneurs en cas de défaillance du circuit principal.

Etant donné la taille des aéronefs commerciaux envisagés à l'heure actuelle, les tuyauteries des circuits hydrauliques atteignent des longueurs qui grèvent de façon non négligeable la masse de l'aéronef, et ce d'autant plus que les actionneurs à alimenter voient leur nombre grandir avec la taille de l'avion. On doubler le circuit hydraulique principal par un circuit de secours se révèlerait pénalisant.

Afin de gagner de la masse, il est connu d'augmenter la pression nominale des circuits hydrauliques (par exemple, en passant de 206 bars à 315 bars). Cette augmentation de pression permet de réduire les surfaces travaillantes des actionneurs en raison du rapport des pressions nominales, et aussi de diminuer le diamètre des tuyauteries. Mais cette augmentation de pression ne procure qu'un gain de masse limité, et en tout état de cause ne permet pas de simplifier les circuits hydrauliques de l'aéronef.

En vue de simplifier et d'alléger le système de freinage d'un tel aéronef, il est connu, notamment du document DE-A-196 54 781, une architecture de circuit hydraulique associé à une servocommande, comprenant une ligne principale d'alimentation et une ligne de retour ayant des composants hydrauliques et adaptée pour acheminer vers la servocommande un fluide hydraulique mis sous pression par au moins un dispositif de génération de pression, l'architecture comprenant en outre un système de secours.

Le système de secours comprend une vanne d'isolation permettant, en cas de problème, d'isoler les lignes d'alimentation et de retour du circuit hydraulique, et une électropompe aspirant le fluide de la ligne retour pour l'injecter dans la ligne d'alimentation en aval de la vanne d'isolation, de sorte que le fluide circule en circuit fermé. Un accumulateur placé sur la ligne retour et maintenu gonflé en fonctionnement normal grâce à un clapet de surpression sur la ligne retour sert à maintenir une pression minimale dans la ligne retour en fonctionnement secours et à absorber ou fournir un débit différentiel entre les chambres de la servocommande, ou encore absorber une dilatation thermique du fluide.

Cette architecture, si elle est adaptée à des servocommandes de gouvernes, n'est en revanche pas utilisable en l'état pour un circuit de freinage. En effet, en cas de rupture de canalisation d'alimentation d'un des freins, l'accumulateur, accueillant un volume de fluide faible, se vide très vite, et ne permet pas de garantir un freinage de durée suffisamment longue pour provoquer l'arrêt de l'aéronef. En d'autres termes, l'accumulateur, s'il remplit la fonction d'une source de pression, ne peut assurer la fonction de source de débit nécessaire à la sécurité de l'aéronef.

L'arrière-plan technologique est également illustré par les documents EP 0 328 175, GB 2 110 330, US 5 397 173, FR 2 224 657, US 4 616 881 et EP 0 477 079.

Selon l'invention, on propose un circuit hydraulique associé à des actionneurs, comprenant un circuit hydraulique principal ayant des composants hydrauliques et adapté pour acheminer vers les actionneurs un fluide hydraulique mis sous pression par au moins un dispositif de génération de pression associé à une réserve principale, le circuit hydraulique comprenant en outre un système de secours qui comporte une réserve auxiliaire ayant une entrée alimentée en permanence par un circuit de retour collectant les retours de tous les composants hydrauliques, et une sortie connectée à la réserve principale via un clapet de surpression, de sorte qu'en fonctionnement normal, le fluide hydraulique transite par la réserve auxiliaire, ledit système de secours comportant en outre une électropompe agencée pour aspirer le fluide contenu dans la réserve auxiliaire et l'injecter dans le circuit principal en aval d'un clapet anti-retour général.

Ainsi, en fonctionnement normal, le dispositif de génération de pression aspire le fluide de la réserve principale, et l'injecte dans le circuit principal. Le fluide est alors envoyé vers les actionneurs, tous les retours étant collectés par le circuit de retour pour être déversés dans la réserve auxiliaire.

Le fluide contenu dans celle-ci se déverse alors dans la réserve principale, à l'exception d'un volume minimal de fluide déterminé par la pression de tarage du clapet de surpression. Un tel système de secours n'a donc pas d'incidence sur le fonctionnement normal du circuit hydraulique, en dehors du volume de fluide stocké en permanence dans la réserve auxiliaire.

En cas de défaillance du dispositif de génération de pression, l'électropompe prend le relais, en injectant dans le circuit principal du fluide sous pression aspiré dans la réserve auxiliaire. Comme les retours des composants hydrauliques sont reversés dans la réserve auxiliaire, le système de secours fonctionne ainsi en circuit fermé, sans que le fluide n'ait à transiter par la réserve principale.

Le volume minimal de fluide présent en permanence dans la réserve auxiliaire sera dans la pratique dimensionné de telle sorte que l'électropompe trouve dans la réserve auxiliaire le volume de fluide suffisant pour répondre aux demandes de débit en provenance des actionneurs. En particulier, la taille de la réserve auxiliaire sera avantageusement prévue assez grande pour permettre, en cas de rupture d'une canalisation d'alimentation d'un des freins, le freinage de l'aéronef pendant un temps suffisamment long pour assurer son arrêt.

Ainsi, la réserve auxiliaire , à la différence des accumulateurs de l'art antérieur, constitue non seulement une source de pression apte à assurer une pression minimale à l'entrée de l'électropompe, mais également une source de débit en cas de rupture de canalisation.

On conçoit que la pression dans la réserve auxiliaire est ainsi fixée par le seuil du clapet de surpression, qui sera en général choisi relativement bas. La réserve auxiliaire ne subit donc jamais la haute pression générée par le dispositif de génération de pression du circuit hydraulique principal.

Par ailleurs, contrairement à un accumulateur, l'intérieur de la réserve auxiliaire est balayé en permanence lors du fonctionnement normal, du fait que les retours sont agencés pour transiter par la réserve, ce qui évite l'accumulation de polluants à l'intérieur de la réserve auxiliaire.

Avantageusement, le système de secours comprend une ligne de dérivation connectant le circuit de retour directement à la réserve principale, une électrovanne étant agencée sur cette ligne de dérivation pour être fermée en fonctionnement normal, et ouverte en cas de défaut intervenant dans le système de secours.

Ainsi, il est possible de court-circuiter la réserve auxiliaire, par exemple dans le cas où la réserve auxiliaire serait bouchée.

De préférence, parmi les composants hydrauliques, il est prévu un accumulateur qui est disposé sur le circuit principal en aval du clapet anti-retour général.

Cet accumulateur sert à assurer les demandes brutales de débit de la part des actionneurs, pour lesquelles l'électropompe n'aurait pas le temps de réagir. L'accumulateur assure alors temporairement la fourniture d'une quantité d'huile aux actionneurs, l'électropompe ayant ensuite le temps de recharger l'accumulateur.

Avantageusement, l'accumulateur est associé à un clapet de surpression relié au circuit de retour.

Ainsi, le trop-plein de l'accumulateur est vidé dans la réserve auxiliaire.

De préférence, un capteur de pression est associé à l'accumulateur.

Ce capteur permet de surveiller les variations de pression dans l'accumulateur, et d'activer l'électropompe en cas de baisse inacceptable de la pression régnant dans l'accumulateur.

Pour un circuit dans lequel le circuit principal comporte des moyens de mise en communication directe de l'accumulateur avec les actionneurs, ces moyens de mise en communication étant activés lorsque le dispositif de génération de pression est à l'arrêt, une vanne est de préférence agencée sur la ligne de dérivation pour être fermée lorsque les moyens de mise en communication directe sont activés.

Ainsi, le fluide transitant par les composants des moyens de mise en communication est dirigé dans la réserve auxiliaire, et ne peut passer par la ligne de dérivation pour se déverser dans la réserve principale.

Au démarrage, si la pression de l'accumulateur a trop baissé, celui-ci sera rechargé par l'électropompe avec le fluide recueilli dans la réserve auxiliaire.

De préférence, l'électropompe comporte une pompe à débit constant associée à un moteur électrique à vitesse variable.

Ainsi, le débit ne dépend pas des conditions de pression régnant en amont et en aval de la pompe, de sorte que l'on peut ajuster le débit par un contrôle du moteur simplifié.

Dans le cadre de l'application de l'invention à un circuit de freinage d'un aéronef dans lequel les actionneurs sont les freins eux-mêmes, parmi les composants hydrauliques, il est prévu au moins un sélecteur de freinage qui est agencé sur le circuit principal en aval du clapet anti-retour général, ledit sélecteur de freinage ayant une ligne de retour reliée audit circuit de retour.

De la même façon, parmi les composants hydrauliques, il est prévu au moins un sélecteur de parc qui est agencé sur le circuit principal, ainsi qu'un accumulateur agencé sur ledit circuit principal en amont dudit sélecteur de parc, le sélecteur de parc ayant une ligne de retour reliée audit circuit de retour.

De préférence alors, un clapet navette est installé en amont de chaque frein, chacun des clapets navettes étant connecté d'une part au sélecteur de freinage via un distributeur proportionnel, chaque distributeur proportionnel ayant une ligne de retour reliée audit circuit de retour, et d'autre part au sélecteur de parc.

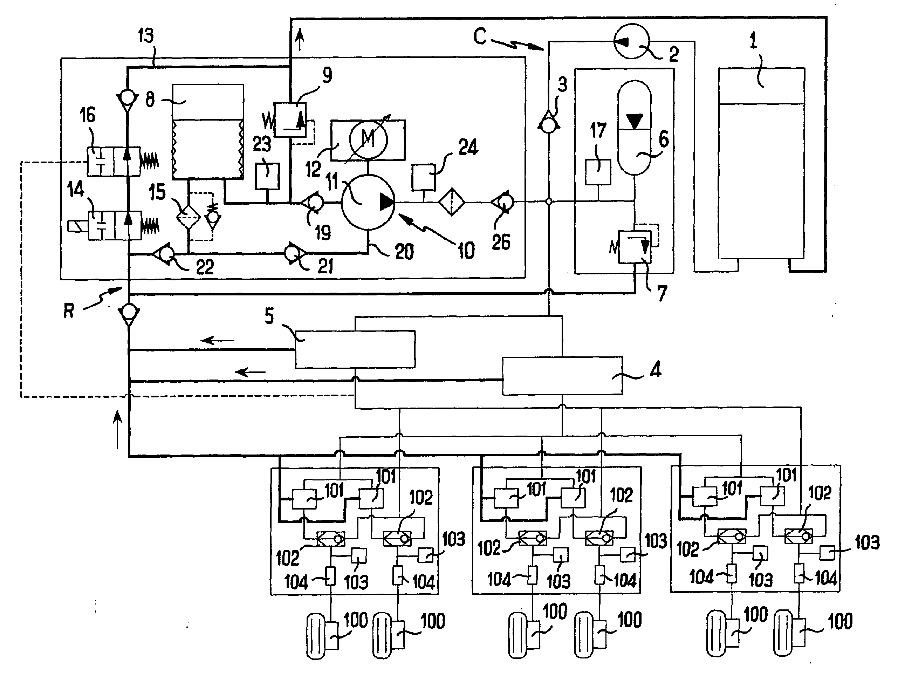

D'autres caractéristiques et avantages de l'invention apparaîtront plus clairement à la lumière de la description qui suit d'un mode de réalisation particulier non limitatif de l'invention. Il sera fait référence à l'unique figure du dessin annexé, représentant une architecture de circuit hydraulique selon l'invention appliquée à un circuit de freinage d'un aéronef.

On décrit ici l'invention en relation avec un circuit hydraulique de freinage d'un aéronef, agencé pour alimenter des freins de référence générale 100. Sur la figure, on a représenté en trait épais les lignes de retour, et en trait mince les lignes d'alimentations.

Un tel circuit hydraulique comporte, de façon connue en soi, une réserve principale 1 de fluide maintenu sous pression (typiquement quelques bars), duquel un dispositif de génération 2 de pression aspire le fluide pour l'envoyer dans le circuit principal C sous pression, ici à une pression de 350 bars. Le dispositif de génération de pression 2 est par exemple constitué d'une pompe entraînée par un les réacteurs de l'aéronef. Le circuit principal C comporte un clapet anti-retour général 3, destiné à protéger le dispositif de génération de pression 2.

De façon également connue en soi, le circuit principal C comporte un sélecteur de freinage 4 et un sélecteur de parc 5.

En aval du sélecteur de freinage 4, se trouvent autant de distributeurs proportionnels 101 qu'il y a de freins 100, chacun d'eux étant relié au frein correspondant via un clapet navette 102. Les clapets navettes 102 sont par ailleurs connectés à la sortie du sélecteur de parc 5.

Quand l'aéronef est en mouvement sur le sol, le sélecteur de freinage 4 est ouvert, tandis que le sélecteur de parc 5 est fermé.

Le fluide est donc conduit vers les distributeurs proportionnels 101 qui servent à moduler la pression du fluide agissant sur les freins pour ajuster le couple de freinage de chaque frein en réponse à des ordres du pilote, ou encore à des consignes d'un système antiblocage.

A cet effet, des capteurs de pression 103 sont installés sur toutes les lignes d'alimentation des freins 100, permettant de mesurer la pression réellement appliquée sur chaque frein 100, et éventuellement de moduler l'ouverture du distributeur proportionnel 101 correspondant si la pression mesurée est éloignée de la pression de consigne.

Lorsque l'aéronef est au parking, réacteurs arrêtés, le sélecteur de freinage 4 est fermé tandis que le sélecteur de parc 5 est ouvert, ce qui permet d'admettre dans les freins 100 du fluide maintenu sous pression par un accumulateur 6 disposé en aval du clapet anti-retour général 3. On assure ainsi un blocage des freins 100 et donc de l'aéronef lorsque celui-ci est à l'arrêt. On notera que l'accumulateur 6 est protégé des surpressions par un clapet de surpression 7.

Des fusibles hydrauliques 104 sont installés sur les lignes d'alimentation des freins 100, en aval des clapets navettes 102, pour protéger ceux-ci d'une éventuelle surpression.

Il est connu que tous les composants hydrauliques du circuit principal C organisant la distribution du fluide vers les freins 100 sont susceptibles de présenter un retour de fluide. Ces retours sont le résultat soit des débits de fluide en provenance des freins (distributeurs proportionnels 101), soit des fuites des composants eux-mêmes (sélecteurs de freinage 4 et de parc 5), soit encore, de l'ouverture du clapet de surpression 7 protégeant l'accumulateur 6.

Selon l'invention, on équipe le circuit hydraulique d'un système de secours particulier. Conformément à une caractéristique essentielle du circuit de l'invention, les retours de tous les composants hydrauliques du circuit principal C (ici le sélecteur de freinage 4, le sélecteur de parc 5, les distributeurs proportionnels 101, et l'accumulateur 6 avec son clapet de surpression 7) sont collectés par un circuit de retour R illustré en traits épais sur la figure pour être déversés dans une réserve auxiliaire 8 via un filtre 15.

La réserve auxiliaire 8 est reliée à la réserve principale 1 par un clapet de surpression 9, en vue de limiter la pression de la réserve auxiliaire 8 à une valeur basse prédéterminée, typiquement de quelques bars.

Une électropompe 10, constituée d'une pompe à débit constant 11 et d'un moteur électrique à régime variable 12, est agencée pour aspirer le fluide de la réserve auxiliaire 8 et l'injecter dans le circuit principal en aval du clapet anti-retour général 3.

Afin de protéger la pompe 11 de l'électropompe 10, des clapets anti-retour 19 et 26 sont disposés respectivement en amont et en aval de la pompe 11.

Par ailleurs, le collecteur de fuite 20 de la pompe 11 est relié au circuit de retour R via un clapet anti-retour 21, un clapet anti-retour 22 monté en opposition, guidant le fluide venant du collecteur de fuite 20 de la pompe 11 vers la réserve auxiliaire 8.

Le fonctionnement du circuit hydraulique est alors le suivant.

Examinons tout d'abord la situtation de fonctionnement normal du dispositif de génération de pression 2.

Le fluide est aspiré par le dispositif de génération de pression 2 dans la réserve principale 1 pour être injecté dans le circuit principal C qui conduit le fluide vers les freins 100. Les retours de fluide des composants hydrauliques sont alors canalisés par le circuit de retour R vers la réserve auxiliaire 8. Lorsque la réserve auxiliaire 8 est remplie au point que sa pression dépasse la pression de tarage du clapet de surpression 9, le fluide se déverse finalement dans la réserve principale 1. Ainsi, en fonctionnement normal, le système de secours est transparent et n'influe pas sur le fonctionnement du circuit hydraulique, en dehors d'un volume de fluide stocké en permanence dans la réserve auxiliaire 8 et déterminé par le seuil du clapet de surpression 9.

A cet égard, il est prévu une ligne de dérivation 13 permettant de diriger le fluide collecté par le circuit de retour R directement vers la réserve principale 1. Cette ligne de dérivation 13 est fermée par une électrovanne 14 en fonctionnement normal. Si un incident était détecté au niveau de la réserve auxiliaire 8 (comme par exemple un bouchage du filtre 15), alors l'électrovanne 14 serait automatiquement ouverte pour permettre le retour du fluide vers la réserve principale 1 sans que celui-ci ne passe dans la réserve auxiliaire 8.

Dans la configuration illustrée ici, l'électrovanne 14 est ouverte lorsqu'elle n'est pas alimentée électriquement, de sorte que la ligne de dérivation 13 serait ouverte lorsque l'aéronef est à l'arrêt.

Or ceci se révèle gênant dans la mesure où à l'arrêt, comme cela a été expliqué précédemment, la pression de l'accumulateur 6 est transmise aux freins 100 via le sélecteur de parc 5. Le fluide s'échappant par fuite du sélecteur de parc 5 serait alors conduit, via le circuit de retour R et la ligne de dérivation 13, directement dans la réserve principale 1.

On a prévu sur la ligne de dérivation 13 une vanne 16 commandée hydrauliquement par une ligne piquée en aval du sélecteur de parc 5. La vanne 16 est ouverte lorsque le sélecteur de parc 5 est fermé, et elle est fermée lorsque le sélecteur de parc 5 est ouvert. Ainsi, le fluide s'échappant de l'accumulateur 6 et collecté par le circuit de retour R est dirigé vers la réserve auxiliaire 8.

Lors du démarrage de l'aéronef, la pression de l'accumulateur 6 est connue grâce à un capteur de pression associé 17, et si cette pression est trop faible, l'électropompe 10 est activée pour regonfler l'accumulateur 6 avec le fluide présent dans la réserve auxiliaire 8.

Examinons maintenant une situation de défaillance du dispositif de génération de pression 2. La fourniture de fluide en réponse aux demandes de débit instantanées des freins 100 est alors assurée par l'accumulateur 6. Ce dernier est regonflé progressivement par l'électropompe 10, au fur et à mesure de la baisse de pression de l'accumulateur 6 qui est suivie à l'aide du capteur de pression 17.

Le fluide s'écoule ainsi depuis la réserve auxiliaire 8 dans le circuit principal C via l'électropompe 10, pour revenir vers la réserve auxiliaire 8 via le circuit de retour R. On a ainsi organisé un circuit hydraulique de secours fermé utilisant certains éléments du circuit hydraulique principal C et remédiant à la défaillance du dispositif de génération de pression 2.

Grâce au système de secours de l'invention, il est possible d'augmenter notablement la sécurité de fonctionnement du circuit de freinage, tout en évitant d'avoir à doubler le freinage par un circuit hydraulique complet.

Par ailleurs, on prévoit avantageusement des capteurs de pression 23 et 24 en amont et en aval de la pompe 11 de l'électropompe 10, dont les indications servent à réguler le régime de rotation du moteur 12 de l'électropompe, pour ajuster le débit de la pompe au débit requis pour recharger l'accumulateur 6.

L'invention n'est pas limitée au mode particulier de réalisation qui vient d'être décrit, mais bien au contraire entend couvrir toute variante qui entre dans le cadre de l'invention tel que défini par les revendications.

En particulier, bien que l'on ait illustré les moyens de maintien de pression dans les freins à l'arrêt comme étant constitués du sélecteur de parc et des clapets navettes, l'invention s'applique également à toute autre architecture comprenant des moyens de mise en communication directe de l'accumulateur avec les freins. Il est à noter que la pression peut être fournie dans ce cas par un accumulateur non relié au circuit.

En outre, il est possible de multiplier un tel système de secours pour en équiper tel ou tel groupe d'actionneurs associés au même circuit principal d'un système de secours spécifique. Ainsi, la défaillance d'un système de secours n'entraîne pas la défaillance des autres systèmes de secours, et chaque système de secours peut être dimensionné au plus juste des besoins de chaque groupe d'actionneurs.

## Revendications

1. Circuit hydraulique associé à des actionneurs (100), comprenant un circuit hydraulique principal (C) au moins un dispositif de génération de pression et une réserve principale (1), le circuit principal (C) ayant des composants hydrauliques (4,5,101,6) et étant adapté pour acheminer vers les actionneurs (100) un fluide hydraulique mis sous pression par ledit au moins un dispositif de génération de pression (2) associé à ladite réserve principale (1), le circuit hydraulique comprenant en outre un système de secours, **caractérisé en ce que** le système de secours comporte une réserve auxiliaire (8) ayant une entrée alimentée en permanence par un circuit de retour (R) collectant les retours de tous les composants hydrauliques (4,5,101,6), et une sortie connectée à la réserve principale (1) via un clapet de surpression (9), de sorte qu'en fonctionnement normal, le fluide hydraulique transite par la réserve auxiliaire, ledit système de secours comportant en outre une électropompe (10) agencée pour aspirer le fluide contenu dans la réserve auxiliaire (8) et l'injecter dans le circuit principal (C) en aval d'un clapet anti-retour général (3).

2. Circuit hydraulique selon la revendication 1, **caractérisée en ce que** le système de secours comprend une ligne de dérivation (13) connectant le circuit de retour (R) directement à la réserve principale (1), une électrovanne (14) étant agencée sur cette ligne de dérivation (13) pour être fermée en fonctionnement normal, et ouverte en cas d'incident intervenant dans le système de secours.

3. Circuit hydraulique selon l'une des revendications précédentes, **caractérisée en ce que**, parmi les composants hydrauliques, il est prévu un accumulateur (6) qui est disposé sur le circuit principal (C) en aval du clapet anti-retour général (3).

4. Circuit hydraulique selon la revendication 3, **caractérisée en ce que** l'accumulateur (6) est associé à un clapet de surpression (7) relié au circuit de retour (R).

5. Circuit hydraulique selon la revendication 3 ou la revendication 4, **caractérisé en ce qu'**un capteur de pression (17) est associé à l'accumulateur (6).

6. Circuit hydraulique selon la revendication 2 et l'une des revendications 4 à 5, **caractérisée en ce que** le circuit principal (c) comporte des moyens de mise en communication directe (5,102) de l'accumulateur (6) avec les actionneurs (100), ces moyens de mise en communication (5,102) étant activés lorsque le dispositif de génération de pression (2) est à l'arrêt, une vanne (16) étant en outre agencée sur la ligne de dérivation (13) pour être fermée lorsque les moyens de mise en communication directe (5,102)sont activés.

7. Circuit hydraulique selon l'une des revendications précédentes, **caractérisée en ce que** l'électropompe (10) comporte une pompe à débit constant (11) associée à un moteur électrique à vitesse variable (12).

8. Circuit hydraulique associé à des freins (100) d'un circuit de freinage d'un aéronef selon l'une des revendications précédentes, **caractérisée en ce que**, parmi les composants hydrauliques, il est prévu au moins un sélecteur de freinage (4) qui est agencé sur le circuit principal (C) en aval du clapet anti-retour général (3), ledit sélecteur de freinage (4) ayant une ligne de retour reliée audit circuit de retour (R).

9. Circuit hydraulique selon la revendication 8, **caractérisé en ce que**, parmi les composants hydrauliques, il est prévu au moins un sélecteur de parc (5) qui est agencé sur le circuit principal (C), ainsi qu'un accumulateur (6) agencé sur ledit circuit principal en amont dudit sélecteur de parc, le sélecteur de parc (5) ayant une ligne de retour reliée audit circuit de retour (R).

10. Circuit hydraulique selon la revendication 8 et la revendication 9, **caractérisée en ce qu'**un clapet navette (102) est installé en amont de chaque frein (100), chacun des clapets navettes (102) étant connecté d'une part au sélecteur de freinage (4) via un distributeur proportionnel (101), chaque distributeur proportionnel (101) ayant une ligne de retour reliée audit circuit de retour (R), et d'autre part au sélecteur de parc (5).

## Claims

1. A hydraulic circuit associated with actuators (100), comprising a main hydraulic circuit (C), at least one pressure generator and one main supply (1), said main hydraulic circuit having hydraulic components (4, 5 101, 6) and adapted to convey hydraulic fluid pressurized by said pressure generator (2) associated with said main supply (1) to the actuators (100), said hydraulic circuit further comprising an emergency system, the architecture being **characterized in that** the emergency system comprises an auxiliary supply (8) having a entry port continuously fed by a return circuit (R) collecting the returns from all of the hydraulic components (4, 5, 101, 6), and an exit port being connected to the main supply (1) via a relief valve (9) so that in normal operation, the hydraulic fluids passes through the auxiliary supply, said emergency system further comprising an electrically driven pump unit (10) arranged to take fluid from the auxiliary supply (8) and inject it into the main circuit (C) downstream from a general check valve (3).

2. A hydraulic circuit according to claim 1, **characterized in that** the emergency system comprises a branch line (13) connecting the return circuit (R) directly to the main supply (1), a solenoid valve (14) being arranged on said branch line (13) so as to be closed in normal operation and open in the event of an incident occurring in the emergency system.

3. A hydraulic circuit according to either preceding claim, **characterized in that** the hydraulic components include an accumulator (6) which is placed on the main circuit (C) downstream from the general check valve (3).

4. A hydraulic circuit according to claim 3, **characterized in that** the accumulator (6) is associated with a relief valve (7) connected to the return circuit (R).

5. A hydraulic circuit according to claim 3 or claim 4, **characterized in that** a pressure sensor (17) is associated with the accumulator (6).

6. A hydraulic circuit according to claim 2 and claim 4 or claim 5, **characterized in that** the main circuit (C) includes means (5, 102) providing direct communication between the accumulator (6) and the actuators (100), said means (5, 102) providing communication being activated when the pressure generator (2) is stopped, a valve (16) also being arranged on the branch line (13) so as to be closed when the direct communication means (5, 102) are activated.

7. A hydraulic circuit according to any preceding claim, **characterized in that** the pump unit (10) comprises a constant flow rate pump (11) associated with a variable speed electric motor (12).

8. A hydraulic circuit according to any preceding claim associated with the brakes (100) of an airplane braking circuit, **characterized in that** the hydraulic components include at least one braking selector (4) which is arranged in the main circuit (C) downstream from the general check valve (3), said braking selector (4) having a return line connected to said return circuit (R).

9. A hydraulic circuit according to claim 8, **characterized in that** the hydraulic components include at least one parking selector (5) arranged in the main circuit (C), together with an accumulator (6) arranged in said main circuit upstream from said parking selector, the parking selector (5) having a return line connected to said return circuit (R).

10. A hydraulic circuit according to claim 8 or claim 9, **characterized in that** a shuttle valve (102) is installed upstream from each brake (100), each shuttle valve (102) being connected firstly to the braking selector (4) via a proportional control valve (101), each proportional control valve (101) having a return line connected to said return circuit (R), and secondly to the parking selector (5).

## Patentansprüche

1. Hydraulikkreis, der mit Aktuatoren (100) verbunden ist, umfassend einen Haupthydraulikkreis (C), mindestens eine Druckerzeugungsvorrichtung und einen Haupttank (1), wobei der Hauptkreis (C) hydraulische Bestandteile (4, 5, 101, 6) umfasst und dazu geeignet ist, zu den Aktuatoren (100) ein Hydraulikfluid zu befördern, das von der genannten mindestens einen Druckerzeugungsvorrichtung (2), die mit dem genannten Haupttank (1) verbunden ist, unter Druck gesetzt wird, wobei der Hydraulikkreis ferner ein Hilfssystem umfasst, **dadurch gekennzeichnet, dass** das Hilfssystem einen Hilfstank (8) umfasst, der einen Eingang hat, der permanent von einem Rückführungskreis (R) gespeist wird, der die Rückläufe aller hydraulischen Bestandteile (4, 5, 101, 6) sammelt, sowie einen Ausgang, der mit dem Haupttank (1) derart über ein Überdruckventil (9) verbunden ist, dass das Hydraulikfluid bei normalem Betrieb durch den Hilfstank hindurch befördert wird, wobei das Hilfssystem ferner eine Elektropumpe (10) umfasst, die derart angeordnet ist, dass sie das in dem Hilfstank (8) enthaltene Fluid ansaugt und es stromabwärts eines Hauptrückschlagventils (3) in den Hauptkreis (C) einspritzt.

2. Hydraulikkreis nach Anspruch 1, **dadurch gekennzeichnet, dass** das Hilfssystem eine Nebenleitung (13) umfasst, die den Rückführungskreis (R) direkt mit dem Haupttank (1) verbindet, wobei in dieser Nebenleitung (13) ein Elektroventil (14) angeordnet ist, das bei normalem Betrieb geschlossen und im Falle eines Zwischenfalls, der sich in dem Hilfssystem ereignet, geöffnet ist.

3. Hydraulikkreis nach einem der vorhergehenden Ansprüche, **dadurch gekennzeichnet, dass** unter den hydraulischen Bestandteilen ein Akkumulator (6) vorgesehen ist, der an dem Hauptkreis (C) stromabwärts des Hauptrückschlagventils (3) angeordnet ist.

4. Hydraulikkreis nach Anspruch 3, **dadurch gekennzeichnet, dass** der Akkumulator (6) an ein Überdruckventil (7) angeschlossen ist, das mit dem Rückführungskreis (R) verbunden ist.

5. Hydraulikkreis nach Anspruch 3 oder Anspruch 4, **dadurch gekennzeichnet, dass** ein Drucksensor (17) mit dem Akkumulator (6) verbunden ist.

6. Hydraulikkreis nach Anspruch 2 und einem der Ansprüche 4 bis 5, **dadurch gekennzeichnet, dass** der Hauptkreis (C) Mittel (5, 102) für eine direkte Verbindung des Akkumulators (6) mit den Aktuatoren (100) umfasst, wobei diese Mittel (5, 102) für eine direkte Verbindung aktiviert werden, wenn die Druckerzeugungsvorrichtung (2) still steht, wobei ein Ventil (16) ferner an der Nebenleitung (13) angeordnet ist, um geschlossen zu werden, wenn die Mittel (5, 102) für eine direkte Verbindung aktiviert sind.

7. Hydraulikkreis nach einem der vorhergehenden Ansprüche, **dadurch gekennzeichnet, dass** die Elektropumpe (10) eine Pumpe (11) mit konstanter Durchflussmenge umfasst, die mit einem Elektromotor (12) mit variabler Geschwindigkeit verbunden ist.

8. Hydraulikkreis nach einem der vorhergehenden Ansprüche, wobei der Hydraulikkreis mit Bremsen (100) eines Bremskreises eines Flugzeugs verbunden ist, **dadurch gekennzeichnet, dass** unter den hydraulischen Bestandteilen mindestens ein Bremswähler (4) vorgesehen ist, der an dem Hauptkreis (C) stromabwärts des Hauptrückschlagventils (3) angeordnet ist, wobei der Bremswähler (4) eine Rückleitung umfasst, die mit dem Rückführungskreis (R) verbunden ist.

9. Hydraulikkreis nach Anspruch 8, **dadurch gekennzeichnet, dass** unter den hydraulischen Bestandteilen mindestens ein Parkwähler (5) vorgesehen ist, der an dem Hauptkreis (C) angeordnet ist, sowie ein Akkumulator (6), der an dem Hauptkreis stromaufwärts des Parkwählers angeordnet ist, wobei der Parkwähler (5) eine Rückleitung hat, die mit dem Rückführungskreis (R) verbunden ist.

10. Hydraulikkreis nach Anspruch 8 und Anspruch 9, **dadurch gekennzeichnet, dass** ein Wechselventil (102) stromaufwärts jeder Bremse (100) installiert ist, wobei jedes einzelne Wechselventil (102) einerseits über ein Proportionalventil (101) mit dem Bremswähler (4) verbunden ist, wobei jedes Proportionalventil (101) eine Rückleitung hat, die mit dem Rückführungskreis (R) verbunden ist, und andererseits mit dem Parkwähler (5) verbunden ist.
